# EUROPÄISCHE PATENTSCHRIFT

(11) **EP 3 243 986 B1**
(45) Veröffentlichungstag und Bekanntmachung des Hinweises auf die Patenterteilung: **19.08.2020**
(21) Anmeldenummer: 17167154.8
(22) Anmeldetag: 19.04.2017
(51) Int. Cl.: E05C 17/28

(54) **FESTSTELLEINRICHTUNG**
FIXING DEVICE
DISPOSITIF DE MAINTIEN

(30) Priorität: 02.05.2016 DE 102016108149
(43) Veröffentlichungstag der Anmeldung: 15.11.2017
(73) Patentinhaber: Stabilus GmbH, 56070 Koblenz (DE)
(72) Erfinder: Born, Frank, 56112 Lahnstein (DE); Mülhöfer, Gerd, 56759 Laubach (DE)
(74) Vertreter: Klein, Thomas

(56) Entgegenhaltungen:
- EP-A2- 0 230 524
- EP-A2- 2 952 775
- DE-A1- 1 459 149
- GB-A- 2 526 828
- JP-A- 2015 031 111
- US-A- 1 444 032
- US-A- 1 794 477

## Beschreibung

Die Erfindung bezieht sich auf eine Feststelleinrichtung zum stufenlosen Feststellen eines um eine Schwenkachse an einem feststehenden ersten Bauteil schwenkbar angelenkten zweiten Bauteil, mit einem an dem ersten Bauteil oder dem zweiten Bauteil quer zur Schwenkachse verschiebbar geführten und mit einem Fluid gefüllten, an seinen beiden Enden geschlossenen Zylinder, in dem ein Kolben verschiebbar geführt ist, der den Innenraum des Zylinders in eine erste Arbeitskammer und eine zweite Arbeitskammer unterteilt, mit einer ersten Ventileinrichtung, durch die bei höherem Druck in der ersten Arbeitskammer gegenüber dem Druck in der zweiten Arbeitskammer die erste Arbeitskammer mit der zweiten Arbeitskammer verbindbar ist und mit einer zweiten Ventileinrichtung, durch die bei höherem Druck in der zweiten Arbeitskammer gegenüber dem Druck in der ersten Arbeitskammer die zweite Arbeitskammer mit der ersten Arbeitskammer verbindbar ist, mit einer an dem Kolben angeordneten Kolbenstange, die durch die erste Arbeitskammer oder die zweite Arbeitskammer hindurch und abgedichtet nach außen geführt ist sowie mit ihrem nach außen ragenden freien Ende an dem ersten Bauteil oder dem zweiten Bauteil befestigt ist.

Bei einer derartigen Feststelleinrichtungen ist es bekannt die Kolbenstange mit ihrem aus dem Zylinder ragenden freien Ende an dem feststehenden ersten Bauteil und den Zylinder mit seinem der Kolbenstange entgegengesetzten Ende oder das freie Ende einer der ersten Kolbenstange entgegengesetzt aus dem Zylinder herausgeführten, mit dem Kolben verbundenen zweiten Kolbenstange an dem schwenkbaren zweiten Bauteil anzulenken.

Solche Feststelleinrichtungen benötigen einen großen, von dem Zylinder überschwenkten Schwenkbereich und behindern so wesentlich einen freien Zugang zu dem feststehenden Bauteil bei aufgeschwenktem zweiten Bauteil.

Aus der EP 0 230 524 A2 ist eine Feststelleinrichtung mit einem Fluid gefüllten Zylinder, zwei Arbeitskammern, zwei Ventileinrichtungen und einer Schub-/Zugstange, die an dem Zylinder angelenkt ist, bekannt. In dieser Feststelleinrichtung wird aber eine Ventileinrichtung durch eine mechanische Bedienung und nicht bei einem höheren Druck bewegt.

Aus der JP 2015 031111 A ist ein Vibrationsdampfer zum Absorbieren der Vibrationen bekannt, die durch ein Erdbeben auf ein Haus einwirken. Ein mit einer Hydraulikflüssigkeit gefüllter Innenraum eines Hydraulikzylinders wird durch einen Kolben in eine erste Zylinderkammer und eine zweite Zylinderkammer unterteilt. In dem Kolben ist ein die beiden Zylinderkammern verbindender Durchlaß angeordnet. Der Kolben weist eine erste Kolbenstange und eine zweite Kolbenstange auf. Die erste Kolbenstange ist durch die erste Zylinderkammer nach außen geführt und die zweite Kolbenstange ist durch die zweite Zylinderkammer nach außen geführt. Die freien Enden der beiden Kolbenstangen sind fest mit dem Boden des Hauses verbunden. Am mittleren Bereich des Hydraulikzylinders ist das eine Ende eines Hebels angelenkt, dessen anderes Ende an einer senkrechten Wand des Hauses angelenkt ist. Die Vibration der senkrechten Wand wird durch eine Axialbewegung des Zylinders absorbiert.

Aus der US 1 794 477 A, der US 1 444 032 A und der DE 14 59 149 A1 sind Feststellvorrichtungen für ein um eine Schwenkachse schwenkbares Bauteil bekannt, bei denen an dem Bauteil eine sich von der Schwenkachse rechtwinklig wegerstreckende Schiene angeordnet ist. Auf der Schiene ist mit Reibschluß das eine Ende eines Schwenkarms angeordnet, dessen anderes Ende an einem feststehenden Bauteil angelenkt ist. Durch den Reibschluß des Schwenkarms auf der Schiene erfolgt ein Feststellen des schwenkbaren Bauteils in seiner eingenommenen Stellung.

Aus der GB 2 526 828 A ein Dämpfer bekannt, der einen mit Fluid gefüllten und durch einen Kolben in zwei Arbeitskammern geteilten Zylinder aufweist. Der von einer Druckfeder in eine Endlage des Zylinders beaufschlagte Kolben weist die beiden Arbeitskammern miteinander verbindende Durchlässe auf.

Aus der EP 2 952 775 A2 ist ein hydraulischer Dämpfer mit einer hydraulischen Stoppeinrichtung für die Aufhängung eines Kraftfahrzeugs bekannt, der einen Zylinder aufweist, dessen mit einer Hydraulikflüssigkeit gefüllter Innenraum von einem Kolben in eine erste Arbeitskammer und eine zweite Arbeitskammer unterteilt ist. Der Kolben weist Ventileinrichtungen auf über die die beiden Arbeitskammern kommunizieren können. Durch die erste Arbeitskammer ist eine Kolbenstange nach außen geführt. Die zweite Arbeitskammer ist über eine flexible Membran von einer mit einem unter Druck stehenden Gas gefüllten Kammer abgetrennt.

Aufgabe der Erfindung ist es eine Feststelleinrichtung der eingangs genannten Art zu schaffen, die bei einfachem und kostengünstig herstellbarem sowie verschleißarmen Aufbau einen reduzierten von dem Zylinder überschwenkten Schwenkbereich aufweist.

Diese Aufgabe wird erfindungsgemäß dadurch gelöst, daß an dem an dem ersten Bauteil sich quer zur Schwenkachse erstreckend angeordneten Zylinder das erste Ende einer Schub-/Zugstange angelenkt ist, deren zweites Ende an dem zweiten Bauteil in einem Abstand zur Schwenkachse angelenkt ist oder daß an dem an dem zweiten Bauteil sich quer zur Schwenkachse erstreckend angeordneten Zylinder das zweite Ende einer Schub-/Zugstange angelenkt ist, deren erstes Ende an dem ersten Bauteil in einem Abstand zur Schwenkachse angelenkt ist.

Bei einer Schwenkbewegung des zweiten Bauteils verbleibt die Kolbenstange zumindest weitgehend in ihrer Position relativ zu dem ersten oder zweiten Bauteil, an dem sie angeordnet ist, während der Zylinder durch die Schub-Zugstange nur auf der Kolbenstange verschoben nicht aber geschwenkt wird.

Vorzugsweise sind das freie Ende der Kolbenstange sowie das zweite Ende der Schub-/Zugstange in dem der Schwenkachse nahen Bereich des ersten Bauteils oder zweiten Bauteils angelenkt.

Dadurch ergibt sich ein besonders kleiner von der Schubstange überschwenkbarer Schwenkbereich.

Vorzugsweise erstreckt sich der Zylinder rechtwinklig zur Schwenkachse und die Schub-/Zugstange erstreckt sich unter einem von einem rechten Winkel abweichenden Winkel zur Längsachse des Zylinders geneigt.

In einfacher defektarmer Ausbildung können die erste Ventileinrichtung und/oder die zweite Ventileinrichtung federkraftbeaufschlagte Rückschlagventileinrichtungen sein.

Ist nur die eine Kolbenstange vorhanden und der Zylinder mit seinen einen Endbereich auf der Kolbenstange axial bewegbar geführt, so ist es von Vorteil, wenn der Zylinder in einem Abstand von dieser Führung noch an einer weiteren Führung axial geführt ist. Dies könnte z.B. eine Führungsbuchse sein, die an dem Bauteil, an dem die Kolbenstange befestigt ist, ebenfalls befestigt ist.

Ist an dem Kolben eine erste Kolbenstange angeordnet, die durch die erste Arbeitskammer hindurch und abgedichtet nach außen geführt sowie mit ihrem nach außen ragenden freien Ende an dem ersten Bauteil oder dem zweiten Bauteil befestigt ist und ist an dem Kolben eine zweite Kolbenstange angeordnet, die durch die zweite Arbeitskammer hindurch und abgedichtet nach außen geführt sowie mit ihrem nach außen ragenden freien Ende an dem ersten Bauteil oder dem zweiten Bauteil befestigt ist, so ist der Zylinder ausschließlich auf den beiden Kolbenstangen verschiebbar geführt und benötigt keine weitere Führung wie z.B. eine Führungsbuchse.

Um am Ende einer Hubbewegung der Kolbenstange relativ zum Zylinder ein hartes Anschlagen des Kolbens am Endverschluß des Zylinders zu vermeiden, kann der Endbereich der Hubbewegung der ersten Kolbenstange und/oder der zweiten Kolbenstange in Ausschubrichtung mittels einer Dämpfeinrichtungen dämpfbar sein.

Dazu kann in einfacher Ausbildung der Endbereich oder beide Endbereiche des Zylinders einen reduzierten zylindrischen Querschnitt aufweisen, wobei jedem Endbereich reduzierten zylindrischen Querschnitt ein nahe am Kolben angeordneter koaxialer Kolbenansatz gegenüberliegt und in den ihm zugeordneten Endbereich reduzierten zylindrischen Querschnitt eintauchbar ist und wobei der Außendurchmesser des Kolbenansatzes gleich oder kleiner ist als der Innendurchmesser des ihm zugeordneten Endbereichs reduzierten Querschnitts.

Vorzugsweise weisen die radial umlaufenden Mantelflächen der Kolbenansätze radial umlaufende Ringnuten auf, in denen elastische Dichtringe angeordnet sind, die radial aus den Ringnuten herausragen und deren Außendurchmesser dem Innendurchmesser der Endbereiche reduzierten Durchmessers entspricht.

Die Kolbenstange oder die erste Kolbenstange und die zweite Kolbenstange können durch Führungs- und Dichtungseinheiten abgedichtet aus dem Inneren des Zylinders nach außen geführt sein.

Das zweite Bauteil kann eine Tür oder eine Klappe sein.

Die Tür oder Klappe kann um eine horizontale oder um eine vertikale Schwenkachse schwenkbar sein. Eine Tür kann z.B. eine Wohnungstür, eine Möbeltür oder eine Fahrzeugtür sein. Die Klappe kann z.B. eine Klappe eines Möbels oder eine Klappe eines Fahrzeugs wie z.B. eine Heckklappe sein. Die Klappe kann auch als Fenster ausgebildet sein.

Vorzugsweise ist der Zylinder mit einem hydraulischen Fluid gefüllt, so daß das festgestellte zweite Bauteil besonders positionsstabil gehalten wird. Es ist aber auch möglich, daß der Zylinder mit einem pneumatischen Fluid gefüllt ist.

Ausführungsbeispiele der Erfindung sind in der Zeichnung dargestellt und werden im Folgenden näher beschrieben. Es zeigen
- Figur 1: ein erstes Ausführungsbeispiel einer Feststelleinrichtung im Längsschnitt
- Figur 2: die Anordnung der Feststelleinrichtung nach Figur 1 an einem Rahmen und einer Tür in Offenposition
- Figur 3: die Anordnung der Feststelleinrichtung nach Figur 1 an einem Rahmen und einer Tür in fast geschlossener Position
- Figur 4: die Anordnung eines zweiten Ausführungsbeispiels einer Feststelleinrichtung an einem Rahmen und einer Tür in Offenposition
- Figur 5: die Anordnung der Feststelleinrichtung nach Figur 4 an einem Rahmen und einer Tür in fast geschlossener Position.

Die in den Figuren dargestellten Einrichtungen weisen als feststehendes erstes Bauteil einen Türrahmen 1 auf, an dessen einer Seite als zweites Bauteil eine Tür 3 um eine vertikale Schwenkachse 2 schwenkbar angelenkt ist.

An einem horizontalen Rahmenteil 4 des Türrahmens 1, das sich rechtwinklig zur Schwenkachse 2 längserstreckt, ist eine Feststelleinrichtung 5 befestigt, die einen an seinen Enden verschlossenen Zylinder 6 aufweist, der sich parallel zur Längserstreckung des Rahmenteils 4 erstreckt.

In dem Zylinder 6 ist ein Kolben 7 verschiebbar angeordnet, der den mit einer Hydraulikflüssigkeit gefüllten Innenraum des Zylinders 6 in eine erste Arbeitskammer 8 und eine zweite Arbeitskammer 9 unterteilt.

An dem Kolben 7 ist eine erste Kolbenstange 10 befestigt, die durch die erste Arbeitskammer 8 hindurchgeführt ist und durch eine nicht dargestellte erste Führungs- und Dichteinheit aus der ersten Arbeitskammer 8 nach außen ragt. Mit seinem nach außen ragenden freien Ende 11 ist die erste Kolbenstange 10 an dem Rahmenteil 4 befestigt.

An dem der Schwenkachse 2 näheren Endbereich des Zylinders 6 ist ein erstes Ende 13 einer Schub-/Zugstange 12 um eine zur Schwenkachse parallelen ersten Anlenkachse 15 schwenkbar angelenkt. Das zweite Ende 14 der sich unter einem von einem rechten Winkel abweichend zum Zylinder 6 zur Seite der Schwenkachse 2 hin geneigten Schub-/Zugstange 12 ist in einem Abstand zur Schwenkachse 2 an der Tür 3 um eine zur Schwenkachse 2 parallele zweite Anlenkachse 16 schwenkbar angelenkt.

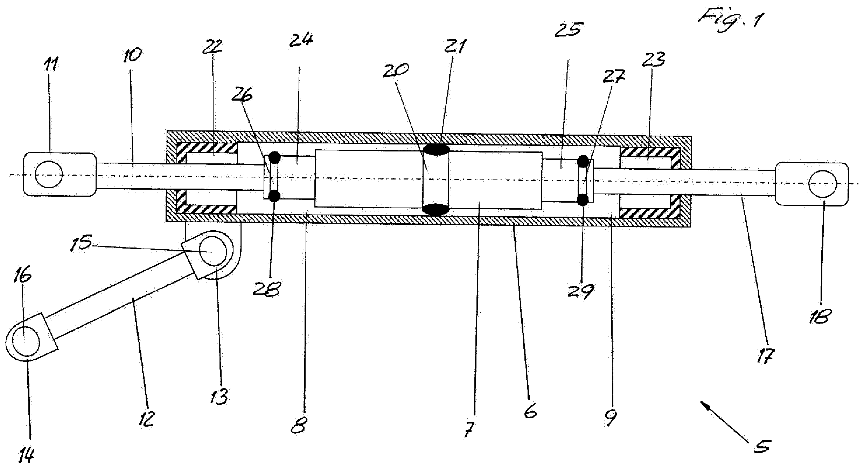

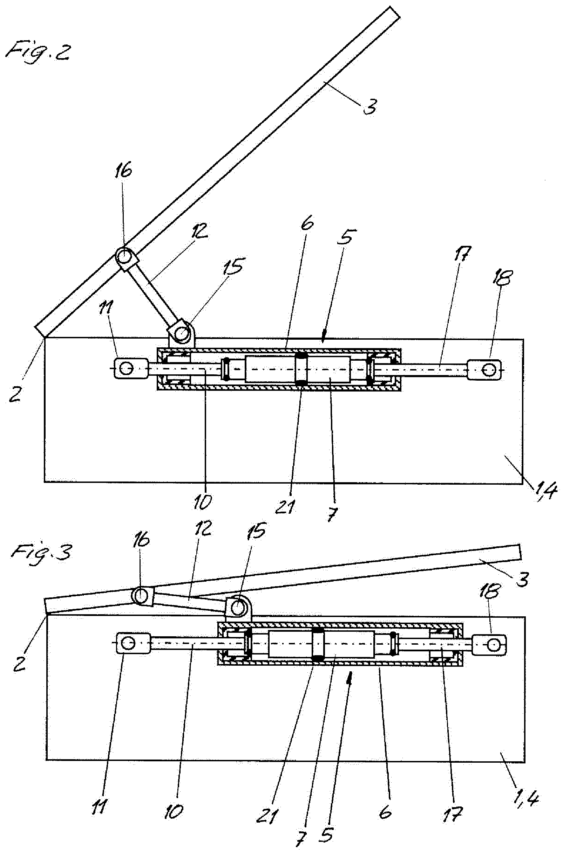

Das Ausführungsbeispiel der Figuren 1, 2 und 3 weist eine zweite Kolbenstange 17 auf, die an dem Kolben 7 befestigt ist und der ersten Kolbenstange 10 entgegengesetzt durch die zweite Arbeitskammer 9 hindurchgeführt ist und durch eine nicht dargestellte zweite Führungs- und Dichteinheit aus der zweiten Arbeitskammer 9 nach außen ragt. Mit seinem nach außen ragenden freien Ende 18 ist die zweite Kolbenstange 17 an dem Rahmenteil 4 befestigt.

Der Zylinder 6 ist auf den beiden Kolbenstangen 10 und 17 relativ zur Längserstreckung des Rahmenteils 4 verschiebbar geführt.

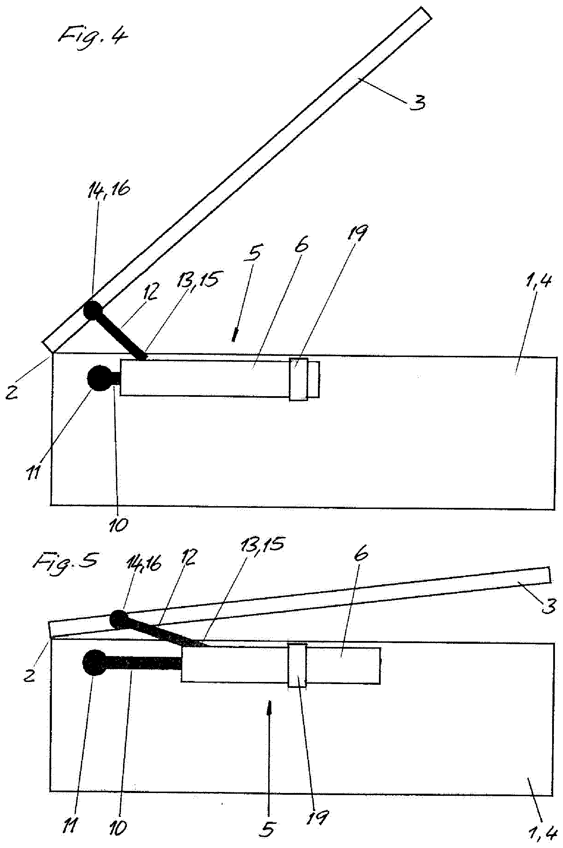

Bei dem Ausführungsbeispiel der Figuren 4 und 5 ist an dem Rahmenteil 4 eine den Zylinder 6 umschließende Führungsbuchse 19 befestigt, in der der Zylinder relativ zur Längserstreckung des Rahmenteils 4 verschiebbar geführt ist.

Der Aufbau im Inneren des Zylinders 6 ist mit der Ausnahme, daß das Ausführungsbeispiel der Figuren 1 bis 3 zwei Kolbenstangen 10 und 17 aufweist und das Ausführungsbeispiel der Figuren 4 und 5 nur eine Kolbenstange 10 aufweist, bei beiden Ausführungen gleich.

Die radial umlaufende Mantelfläche des Kolbens 7 weist in dessen mittleren Bereich eine radial umlaufende Ringnut 20 auf, in der ein elastischer Ring 21 angeordnet ist, der mit seinem aus der Ringnut 20 herausragenden Bereich an der Innenwand des Zylinders 6 in Anlage ist.

Durch den Ring 21 und den Kolben 7 werden die beiden Arbeitskammern 8 und 9 voneinander getrennt. Der Ring 21 symbolisiert darüber hinaus eine erste Ventileinrichtung, durch die bei höherem Druck in der ersten Arbeitskammer 8 gegenüber dem Druck in der zweiten Arbeitskammer 9 die erste Arbeitskammer 8 mit der zweiten Arbeitskammer 9 verbindbar ist und eine zweiten Ventileinrichtung, durch die bei höherem Druck in der zweiten Arbeitskammer 9 gegenüber dem Druck in der ersten Arbeitskammer 8 die zweite Arbeitskammer 9 mit der ersten Arbeitskammer 8 verbindbar ist.

Ein höherer Druck in einer Arbeitskammer 8 oder 9 entsteht dadurch, daß die Tür manuell in Schwenkrichtung kraftbeaufschlagt wird. Durch die geöffnete entsprechende Ventileinrichtung kommt es zum Überströmen von Hydraulikflüssigkeit von einer zur anderen Arbeitskammer 8, 9. Nach Beenden der manuellen Kraftbeaufschlagung der Tür schließt die Ventileinrichtung wieder und die Tür wird von der Feststelleinrichtung in ihrer eingenommenen Position gehalten.

Bei dem Ausführungsbeispiel der Figuren 4 und 5 weist der der Schwenkachse 2 entferntere Endbereich 23 des Zylinders 6 und bei dem Ausführungsbeispiel der Figuren 1 bis 3 weisen beide Endbereiche 22 und 23 des Zylinders 6 einen reduzierten zylindrischen Querschnitt auf. Jedem reduzierten zylindrischen Querschnitt liegt ein nahe am Kolben 7 angeordneter koaxialer Kolbenansatz 24, 25 gegenüber. Dieser Kolbenansatz 24, 25 taucht in dem jeweiligen Endhub des Kolbens 7 in den ihm zugeordneten reduzierten zylindrischen Querschnitt ein, wobei der Außendurchmesser des Kolbenansatzes 24, 25 etwas kleiner ist als der Innendurchmesser des ihm zugeordneten Endbereichs 22, 23 reduzierten Querschnitts.

Die radial umlaufenden Mantelflächen der Kolbenansätze 24, 25 weisen radial umlaufende Ringnuten 26, 27 auf, in denen elastische Dichtringe 28, 29 angeordnet sind, die radial aus den Ringnuten herausragen und an den Innenwänden der Endbereiche 22, 23 reduzierten Querschnitts in Anlage sind.

Durch das Eitauchen der Kolbenansätze 24, 25 in die ihnen zugeordneten Endbereiche 22, 23 reduzierten Querschnitts wird die Bewegung des Zylinders 6 in ihrem Endhub gedämpft.

### Bezugszeichenliste

- 1: Türrahmen
- 2: Schwenkachse
- 3: Tür
- 4: horizontales Rahmenteil
- 5: Feststelleinrichtung
- 6: Zylinder
- 7: Kolben
- 8: erste Arbeitskammer
- 9: zweite Arbeitskammer
- 10: erste Kolbenstange
- 11: freies Ende
- 12: Schub-/Zugstange
- 13: erstes Ende
- 14: zweites Ende
- 15: erste Anlenkachse
- 16: zweite Anlenkachse
- 17: zweite Kolbenstange
- 18: freies Ende
- 19: Führungsbuchse
- 20: Ringnut
- 21: elastischer Ring
- 22: Endbereich
- 23: Endbereich
- 24: Kolbenansatz
- 25: Kolbenansatz
- 26: Ringnut
- 27: Ringnut
- 28: Dichtring
- 29: Dichtring

## Patentansprüche

1. Feststelleinrichtung zum stufenlosen Feststellen eines um eine Schwenkachse (2) an einem feststehenden ersten Bauteil schwenkbar angelenkten zweiten Bauteil, mit einem an dem ersten Bauteil oder dem zweiten Bauteil quer zur Schwenkachse (2) verschiebbar geführten und mit einem Fluid gefüllten, an seinen beiden Enden geschlossenen Zylinder (6), in dem ein Kolben (7) verschiebbar geführt ist, der den Innenraum des Zylinders (6) in eine erste Arbeitskammer (8) und eine zweite Arbeitskammer (9) unterteilt, mit einer ersten Ventileinrichtung, durch die bei höherem Druck in der ersten Arbeitskammer (8) gegenüber dem Druck in der zweiten Arbeitskammer (9) die erste Arbeitskammer (8) mit der zweiten Arbeitskammer (9) verbindbar ist und mit einer zweiten Ventileinrichtung, durch die bei höherem Druck in der zweiten Arbeitskammer (9) gegenüber dem Druck in der ersten Arbeitskammer (8) die zweite Arbeitskammer (9) mit der ersten Arbeitskammer (8) verbindbar ist, mit einer an dem Kolben (7) angeordneten Kolbenstange (10), die durch die erste Arbeitskammer (8) oder die zweite Arbeitskammer hindurch und abgedichtet nach außen geführt ist sowie mit ihrem nach außen ragenden freien Ende (11) an dem ersten Bauteil oder dem zweiten Bauteil befestigbar ist, **dadurch gekennzeichnet, daß** an dem an dem ersten Bauteil sich quer zur Schwenkachse (2) erstreckend angeordneten Zylinder (6) das erste Ende (13) einer Schub-/Zugstange (12) angelenkt ist, deren zweites Ende (14) an dem zweiten Bauteil in einem Abstand zur Schwenkachse (2) anlenkbar ist oder daß an dem an dem zweiten Bauteil sich quer zur Schwenkachse erstreckend angeordneten Zylinder das zweite Ende einer Schub-/Zugstange angelenkt ist, deren erstes Ende an dem ersten Bauteil in einem Abstand zur Schwenkachse anlenkbar ist.

2. Feststelleinrichtung nach Anspruch 1, **dadurch gekennzeichnet, daß** der Zylinder (6) sich rechtwinklig zur Schwenkachse (2) erstreckt und die Schub-/Zugstange (12) sich unter einem von einem rechten Winkel abweichenden Winkel zur Längsachse des Zylinders (6) geneigt erstreckt.

3. Feststelleinrichtung nach einem der vorhergehenden Ansprüche, **dadurch gekennzeichnet, daß** die erste Ventileinrichtung und/oder die zweite Ventileinrichtung federkraftbeaufschlagte Rückschlagventileinrichtungen sind.

4. Feststelleinrichtung nach einem der vorhergehenden Ansprüche, **dadurch gekennzeichnet, daß** an dem Kolben (7) eine erste Kolbenstange (10) angeordnet ist, die durch die erste Arbeitskammer (8) hindurch und abgedichtet nach außen geführt sowie mit ihrem nach außen ragenden freien Ende (11) an dem ersten Bauteil oder dem zweiten Bauteil befestigt ist und daß an dem Kolben (7) eine zweite Kolbenstange (17) angeordnet ist, die durch die zweite Arbeitskammer (9) hindurch und abgedichtet nach außen geführt sowie mit ihrem nach außen ragenden freien Ende (18) an dem ersten Bauteil oder dem zweiten Bauteil befestigt ist.

5. Feststelleinrichtung nach einem der vorhergehenden Ansprüche, **dadurch gekennzeichnet, daß** der Endbereich der Hubbewegung der ersten Kolbenstange (10) und/oder der zweiten Kolbenstange (17) in Ausschubrichtung mittels einer Dämpfeinrichtung dämpfbar ist.

6. Feststelleinrichtung nach Anspruch 5, **dadurch gekennzeichnet, daß** der Endbereich (22) oder beide Endbereiche (22, 23) des Zylinders (6) einen reduzierten zylindrischen Querschnitt aufweisen, wobei jedem Endbereich (22, 23) reduzierten zylindrischen Querschnitts ein nahe am Kolben (7) angeordneter koaxialer Kolbenansatz (24, 25) gegenüberliegt und in den ihm zugeordneten Endbereich (22, 23) reduzierten zylindrischen Querschnitts eintauchbar ist und wobei der Außendurchmesser des Kolbenansatzes (24, 25) gleich oder kleiner ist als der Innendurchmesser des ihm zugeordneten Endbereichs (22, 23) reduzierten Querschnitts.

7. Feststelleinrichtung nach Anspruch 6, **dadurch gekennzeichnet, daß** die radial umlaufenden Mantelflächen der Kolbenansätze (24, 25) radial umlaufende Ringnuten (26, 27) aufweisen, in denen elastische Dichtringe (28, 29) angeordnet sind, die radial aus den Ringnuten (26, 27) herausragen und deren Außendurchmesser dem Innendurchmesser der Endbereiche (22, 23) reduzierten Durchmessers entspricht.

8. Feststelleinrichtung nach einem der vorhergehenden Ansprüche, **dadurch gekennzeichnet, daß** die Kolbenstange (10) oder die erste Kolbenstange (10) und die zweite Kolbenstange (17) durch Führungs- und Dichtungseinheiten abgedichtet aus dem Inneren des Zylinders (6) nach außen geführt sind.

9. Feststelleinrichtung nach einem der vorhergehenden Ansprüche, **dadurch gekennzeichnet, daß** das erste Bauteil ein Türrahmen (1) und das zweite Bauteil eine Tür (3) oder eine Klappe ist.

10. Feststelleinrichtung nach einem der vorhergehenden Ansprüche, **dadurch gekennzeichnet, daß** der Zylinder (6) mit einem hydraulischen Fluid gefüllt ist.

## Claims

1. Fixing device for infinitely variably fixing a second component which is coupled to a fixed first component so as to be pivotable about a pivot axis (2), with a cylinder (6) which is guided on the first component or the second component so as to be displaceable transversely with respect to the pivot axis (2), is filled with a fluid and is closed at both of its ends and in which a piston (7) is guided displaceably, said piston dividing the interior of the cylinder (6) into a first working chamber (8) and a second working chamber (9), with a first valve device by means of which, in the event of higher pressure in the first working chamber (8) in relation to the pressure in the second working chamber (9), the first working chamber (8) is connectable to the second working chamber (9), and with a second valve device by means of which, in the event of higher pressure in the second working chamber (9) in relation to the pressure in the first working chamber (8), the second working chamber (9) is connectable to the first working chamber (8), with a piston rod (10) which is arranged on the piston (7) and is guided through the first working chamber (8) or the second working chamber and in a manner sealed to the outside and is fastenable with its outwardly protruding free end (11) to the first component or to the second component, **characterized in that** the first end (13) of a push/pull rod (12) is coupled to the cylinder (6), which is arranged on the first component in a manner extending transversely with respect to the pivot axis (2), the second end (14) of which push/pull rod can be coupled to the second component at a distance from the pivot axis (2), or **in that** the second end of a push/pull rod is coupled to the cylinder, which is arranged on the second component in a manner extending transversely with respect to the pivot axis, the first end of which push/pull rod can be coupled to the first component at a distance from the pivot axis.

2. Fixing device according to Claim 1, **characterized in that** the cylinder (6) extends at right angles to the pivot axis (2) and the push/pull rod (12) extends inclined at an angle differing from a right angle with respect to the longitudinal axis of the cylinder (6).

3. Fixing device according to either of the preceding claims, **characterized in that** the first valve device and/or the second valve device are/is spring-loaded nonreturn valve devices.

4. Fixing device according to one of the preceding claims, **characterized in that** a first piston rod (10) is arranged on the piston (7), said piston rod being guided through the first working chamber (8) in a manner sealed to the outside and being fastened with its outwardly protruding free end (11) to the first component or to the second component, and **in that** a second piston rod (17) is arranged on the piston (7), said piston rod being guided through the second working chamber (9) in a manner sealed to the outside and being fastened with it outwardly protruding free end (18) to the first component or to the second component.

5. Fixing device according to one of the preceding claims, **characterized in that** the end region of the stroke movement of the first piston rod (10) and/or of the second piston rod (17) in the extension direction can be damped by means of a damping device.

6. Fixing device according to Claim 5, **characterized in that** the end region (22) or both end regions (22, 23) of the cylinder (6) has or have a reduced cylindrical cross section, wherein a coaxial piston extension (24, 25) arranged close to the piston (7) lies opposite each end region (22, 23) of reduced cylindrical cross section and can be entered into the end region (22, 23) of reduced cylindrical cross section that is assigned thereto, and wherein the outside diameter of the piston extension (24, 25) is equal to or smaller than the inside diameter of the end region (22, 23) of reduced cross section that is assigned thereto.

7. Fixing device according to Claim 6, **characterized in that** the radially encircling circumferential surfaces of the piston extensions (24, 25) have radially encircling radial grooves (26, 27) in which elastic sealing rings (28, 29) are arranged, which sealing rings project radially out of the annular grooves (26, 27) and the outside diameter of which corresponds to the inside diameter of the end regions (22, 23) of reduced diameter.

8. Fixing device according to one of the preceding claims, **characterized in that** the piston rod (10) or the first piston rod (10) and the second piston rod (17) are guided to the outside from the interior of the cylinder (6) in a manner sealed by guide and sealing units.

9. Fixing device according to one of the preceding claims, **characterized in that** the first component is a door frame (1) and the second component is a door (3) or a flap.

10. Fixing device according to one of the preceding claims, **characterized in that** the cylinder (6) is filled with a hydraulic fluid.

## Revendications

1. Dispositif de fixation pour la fixation continue d'un deuxième composant articulé à un premier composant fixe de manière à pouvoir pivoter autour d'un axe de pivotement (2), avec un cylindre (6) guidé de manière déplaçable au niveau du premier composant ou du deuxième composant transversalement à l'axe de pivotement (2) et rempli d'un fluide, fermé au niveau de ses deux extrémités, dans lequel un piston (7) est guidé de manière déplaçable, lequel divise l'espace intérieur du cylindre (6) en une première chambre de travail (8) et une deuxième chambre de travail (9), avec un premier dispositif de soupape par lequel la première chambre de travail (8) peut être connectée à la deuxième chambre de travail (9) dans le cas d'une pression dans la première chambre de travail (8) supérieure à la pression dans la deuxième chambre de travail (9), et avec un deuxième dispositif de soupape, par lequel la deuxième chambre de travail (9) peut être connectée à la première chambre de travail (8) en cas de pression dans la deuxième chambre de travail (9) supérieure à la pression dans la première chambre de travail (8), avec une tige de piston (10) disposée au niveau du piston (7), laquelle est guidée à travers la première chambre de travail (8) ou la deuxième chambre de travail et de manière étanchéifiée par rapport à l'extérieur et laquelle peut être fixée par son extrémité libre (11) faisant saillie vers l'extérieur au premier composant ou au deuxième composant, **caractérisé en ce que** la première extrémité (13) d'une tige de poussée/traction (12) est articulée au cylindre (6) disposé au niveau du premier composant de manière à s'étendre transversalement à l'axe de pivotement (2), la deuxième extrémité (14) de la tige de poussée/traction pouvant être articulée au deuxième composant à distance de l'axe de pivotement (2),
ou **en ce que** la deuxième extrémité d'une tige de poussée/traction est articulée au cylindre disposé au niveau du deuxième composant de manière à s'étendre transversalement à l'axe de pivotement, la première extrémité de la tige de poussée/traction pouvant être articulée au premier composant à distance de l'axe de pivotement.

2. Dispositif de fixation selon la revendication 1, **caractérisé en ce que** le cylindre (6) s'étend à angle droit par rapport à l'axe de pivotement (2) et la tige de poussée/traction (12) s'étend de manière inclinée suivant un angle s'écartant d'un angle droit par rapport à l'axe longitudinal du cylindre (6).

3. Dispositif de fixation selon l'une quelconque des revendications précédentes, **caractérisé en ce que** le premier dispositif de soupape et/ou le deuxième dispositif de soupape sont des dispositifs de soupape anti-retour sollicités par une force de ressort.

4. Dispositif de fixation selon l'une quelconque des revendications précédentes, **caractérisé en ce qu'**une première tige de piston (10) est disposée au niveau du piston (7), laquelle est guidée à travers la première chambre de travail (8) et de manière étanchéifiée par rapport à l'extérieur et laquelle est fixée par son extrémité libre (11) faisant saillie vers l'extérieur au premier composant ou au deuxième composant et **en ce qu'**une deuxième tige de piston (17) est disposée au niveau du piston (7), laquelle est guidée à travers la deuxième chambre de travail (9) et de manière étanchéifiée par rapport à l'extérieur et laquelle est fixée par son extrémité libre (18) faisant saillie vers l'extérieur au premier composant ou au deuxième composant.

5. Dispositif de fixation selon l'une quelconque des revendications précédentes, **caractérisé en ce que** la plage de la fin du mouvement de course de la première tige de piston (10) et/ou de la deuxième tige de piston (17) dans la direction de sortie peut être amortie au moyen d'un dispositif d'amortissement.

6. Dispositif de fixation selon la revendication 5, **caractérisé en ce que** la région d'extrémité (22) ou les deux régions d'extrémité (22, 23) du cylindre (6) présentent une section transversale cylindrique réduite, une pièce de piston coaxiale (24, 25) disposée à proximité du piston (7) étant opposée à chaque région d'extrémité (22, 23) de section transversale cylindrique réduite et pouvant s'enfoncer dans la région d'extrémité (22, 23) de section transversale cylindrique réduite associée à cette pièce de piston, et le diamètre extérieur de la pièce de piston (24, 25) étant inférieur ou égal au diamètre intérieur de la région d'extrémité (22, 23) de section transversale réduite associée à cette pièce de piston.

7. Dispositif de fixation selon la revendication 6, **caractérisé en ce que** les surfaces d'enveloppe radialement périphériques des pièces de piston (24, 25) présentent des rainures annulaires radialement périphériques (26, 27) dans lesquelles sont disposées des bagues d'étanchéité élastiques (28, 29) qui font saillie radialement hors des rainures annulaires (26, 27) et dont le diamètre extérieur correspond au diamètre intérieur des régions d'extrémité (22, 23) de diamètre réduit.

8. Dispositif de fixation selon l'une quelconque des revendications précédentes, **caractérisé en ce que** la tige de piston (10) ou la première tige de piston (10) et la deuxième tige de piston (17) est/sont guidées de manière étanchéifiée par des unités de guidage et d'étanchéité hors de l'intérieur du cylindre (6) vers l'extérieur.

9. Dispositif de fixation selon l'une quelconque des revendications précédentes, **caractérisé en ce que** le premier composant est un cadre de porte (1) et le deuxième composant est une porte (3) ou un volet.

10. Dispositif de fixation selon l'une quelconque des revendications précédentes, **caractérisé en ce que** le cylindre (6) est rempli avec un fluide hydraulique.
